# NEUE EUROPÄISCHE PATENTSCHRIFT

(11) **EP 3 612 436 B2**
(45) Veröffentlichungstag und Bekanntmachung des Hinweises auf die Entscheidung über den Einspruch: **24.12.2025**
(45) Hinweis auf die Patenterteilung: 10.03.2021
(21) Anmeldenummer: 18717933.8
(22) Anmeldetag: 18.04.2018
(51) Int. Cl.: B62D 25/00, B62D 29/00

(54) **VERSTÄRKUNGSELEMENT**
REINFORCING ELEMENT
ÉLÉMENT DE RENFORT

(30) Priorität: 21.04.2017 EP 17167611
(43) Veröffentlichungstag der Anmeldung: 26.02.2020
(73) Patentinhaber: Sika Technology AG, 6340 Baar (CH)
(72) Erfinder: QIAN, Xuping, Novi, Michigan 48375 (US); HELFERTY, Raymond, Macomb, Michigan 48042 (US); NIEZUR, Michael, Southfield, Michigan 48076 (US)
(74) Vertreter: Sika Patent Attorneys
(86) Internationale Anmeldenummer: PCT/EP2018/059848
(87) Internationale Veröffentlichungsnummer: WO 2018/192946

(56) Entgegenhaltungen:
- EP-A1- 1 387 789
- EP-A2- 1 084 816
- JP-A- 2010 036 696
- US-A1- 2008 296 164
- US-B1- 6 247 287
- US-B2- 6 729 425

## Beschreibung

Die Erfindung betrifft ein Verstärkungselement zur Verstärkung von Strukturelementen in Fahrzeugen. Des Weiteren betrifft die Erfindung Fahrzeuge mit Strukturelementen, welche durch ein Verstärkungselement verstärkt sind.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (englisch: baffle) verwendet, um Hohlräume abzudichten und/oder akustisch abzuschotten, oder Verstärkungselemente (englisch: reinforcer) verwendet, um Hohlräume zu verstärken.

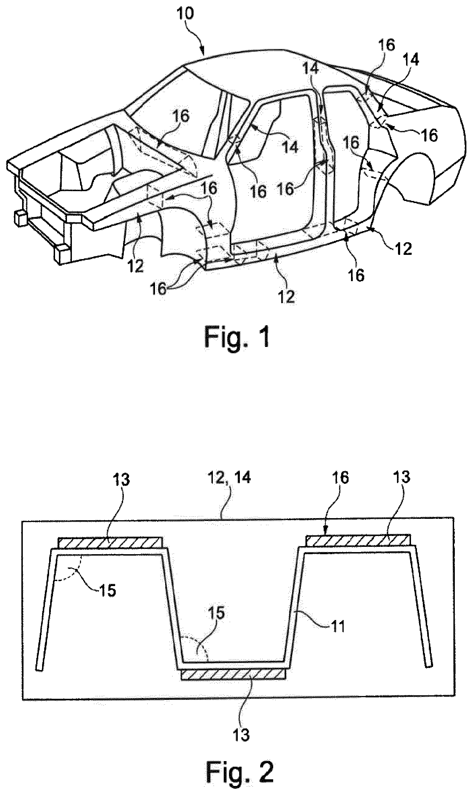

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12, auf. Solche Strukturelemente 12, 14 mit Hohlräumen werden üblicherweise mit Abdichtungs- und/oder Verstärkungselementen 16 abgedichtet bzw. verstärkt.

In Fig. 2 ist schematisch ein bekanntes Konzept zum Abdichten und/oder Verstärken von solchen Strukturelementen mit Hohlräumen in Kraftfahrzeugen dargestellt. Dabei zeigt die Fig. 2 ein Dämmelement 16 in einem Strukturelement 12, 14 vor einer Expansion eines expandierbaren Materials 13. In diesem Beispiel ist das expandierbare Material 13 auf Oberflächen eines Trägerelementes 11 angeordnet, welche in einer Nähe zum Strukturelement 12, 14 angeordnet sind. Das Trägerelement 11 weist in diesem Ausführungsbeispiel einen M- bzw. W-förmigen Querschnitt auf. Dadurch wird eine Steifigkeit des Trägerelementes 11 erhöht.

Dieses Trägerelement 11 bzw. das Dämmelement 16 gemäss dem Stand der Technik ist im Querschnitt derart ausgebildet, dass es auf einfache Art und Weise im Spritzgussverfahren hergestellt werden kann. Hierzu sind benachbarte Flächen des Trägerelementes 11 mit einem Winkel 15 ausgebildet, welcher geringfügig grösser als 90° ist. Durch eine solche Ausgestaltung des Querschnittes des Trägerelementes 11 kann das spritzgegossene Trägerelement 11 einfach von der Form der Spritzgussmaschine abgezogen werden.

Eine Oberfläche des Trägerelementes 11, welche jeweils einer Innenseite des Strukturelementes 12, 14 zugewandt ist, weist typischerweise eine schachbrettartige Form auf. Dabei kann das Verbindungsmaterial bzw. das expandierbare Material 13 jeweils nur auf Flächen angeordnet werden, welche in der Nähe des Strukturelementes 12, 14 angeordnet sind.

Zur weiteren Verstärkung von solchen Verstärkungselementen 16 wurden bereits mehrere Verbesserungen vorgeschlagen. So offenbart beispielsweise die US 2014/0237941 A1 ein Verstärkungselement mit einem U-förmigen Einsatz. Dabei ist dieser U-förmige Einsatz so in das Verstärkungselement integriert, dass dieses an spezifischen Orten mechanisch stärker belastbar gemacht werden kann. Ein anderer Ansatz wird in der US 2009/0085379 A1 verfolgt. Hier werden drei nebeneinander liegende Elemente zu einem Verstärkungselement zusammengefügt Die US2008/296164 zeigt ein Träger mit Einsatzelementen in einem Verstärkungselement, wobei die Einsatzelemente mit zwei Klebstoffen an Träger und Verstärkungselement befestigt sind. Die vorliegende Erfindung geht von diesem Stand der Technik aus.

Nachteilig an den bisher bekannten Verstärkungselementen ist es, dass einerseits deren mechanische Stabilität für bestimmte Anwendungen, insbesondere im Bereich von crashrelevanten Strukturen, weiterhin verbesserungswürdig ist. Andererseits haben die bekannten Lösungen den Nachteil, dass Anbindungspunkte für den Klebstoff, um das Verstärkungselement mit dem Strukturelement zu verkleben, an wichtigen Orten des Verstärkungselementes wenig Flächen bieten.

Der Erfindung liegt daher die Aufgabe zugrunde, ein verbessertes Verstärkungselement zur Verfügung zu stellen, welches eine verbesserte mechanische Stabilität aufweist, insbesondere um crashrelevante Strukturen an einem Fahrzeug besser verstärken zu können. Zudem soll das erfindungsgemäße Verstärkungselement kostengünstig hergestellt und einfach in Fahrzeuge verbaut werden können.

Diese Aufgabe wird gelöst durch ein Verstärkungselement zur Verstärkung von Strukturelementen in Fahrzeugen, wobei das Verstärkungselement zunächst einen Träger mit einer Längsachse umfasst. Dabei weist der Träger zumindest eine längliche Öffnung auf, welche in Richtung der Längsachse verläuft. Das Verstärkungselement umfasst weiterhin mindestens ein Einsatzelement mit einer Längsachse, welches dazu ausgebildet ist, in der länglichen Öffnung des Trägers angeordnet zu werden. Das Einsatzelement hat dabei mehrere erste Abschnitte und mehrere zweite Abschnitte. Die ersten Abschnitte sind parallel zu einer ersten Ebene, wobei die Längsachse des Einsatzelementes in dieser ersten Ebene liegt. Die zweiten Abschnitte sind parallel zu einer zweiten Ebene, wobei die Längsachse des Einsatzelementes orthogonal zu dieser zweiten Ebene liegt. Das Verstärkungselement umfasst weiterhin einen ersten Klebstoff, welcher auf einer Außenseite des Trägers und auf einer ersten Gruppe von ersten Abschnitten des Einsatzelementes anordenbar ist und welcher dazu ausgebildet ist, den Träger und das Einsatzelement im Strukturelement zu verkleben. Weiterhin umfasst das Verstärkungselement einen zweiten Klebstoff, welcher auf einer zweiten Gruppe von ersten Abschnitten des Einsatzelementes anordenbar ist und welcher dazu ausgebildet ist, das Einsatzelement im Träger zu verkleben, wobei der zweite Klebstoff (19) nicht expandierbar ausgebildet ist.

Diese Lösung hat den Vorteil, dass durch derart mit dem Strukturelement und dem Träger verklebte Einsatzelemente eine sehr hohe mechanische Stabilität des Verstärkungselementes erreicht werden kann. Dabei ist das Einsatzelement nicht nur mit dem Träger verbunden zu dessen Verstärkung, sondern das Einsatzelement ist seinerseits ebenfalls direkt mit dem Strukturelement verklebbar, so dass eine zusätzliche mechanische Stabilisierung des Gesamtsystems erfolgen kann.

Ein Kerngedanke der vorliegenden Erfindung besteht darin, dass durch das Vorsehen von separaten Elementen, nämlich des Trägers und des Einsatzelementes, Geometrien des Verstärkungselementes realisiert werden können, welche so durch ein einzelnes Element nicht oder nur sehr schwer zu realisieren wären. Durch ein Verschachteln und ein Verbinden des Trägers mit dem Einsatzelement kann einerseits eine direkte Verstärkung des Trägers erzielt werden, und andererseits kann durch zusätzliche Oberflächen des Einsatzelementes, welche direkt mit dem Strukturelement verklebbar ausgestaltet sind, eine Verbindungsfläche zwischen Verstärkungselement und Strukturelement vergrößert werden, was eine Erhöhung der Gesamtstabilität bzw. der mechanischen Belastbarkeit des Gesamtsystems zur Folge hat.

In einer beispielhaften Ausführungsform sind der Träger und/oder das Einsatzelement aus Metallblech gebildet.

In einer alternativen Ausführungsform sind der Träger und/oder das Einsatzelement aus Kunststoff, insbesondere Polyamid, gebildet.

In einer weiteren beispielhaften Ausführungsform sind Träger und Einsatzelement nicht aus demselben Material gebildet, wobei sowohl der Träger aus Metallblech und das Einsatzelement aus Kunststoff gebildet sein kann oder aber der Träger aus Kunststoff und das Einsatzelement aus Metallblech gebildet sein kann.

Je nach Anforderungen an das Verstärkungselement kann hier eine vorteilhafte Materialwahl getroffen werden. Je nachdem, welche der Faktoren Gewicht, Kosten und mechanische Stabilität für eine jeweilige Anwendung höher gewichtet werden, kann eine andere Materialkombination vorteilhaft sein.

Für Anwendungen, in welchen eine möglichst hohe mechanische Stabilität erreicht werden soll, wird vorteilhafterweise ein Träger aus Metallblech mit einem Einsatzelement aus Metallblech kombiniert.

In einer beispielhaften Ausführungsform sind der Träger und/oder das Einsatzelement einstückig ausgebildet.

Das Vorsehen von einstückig ausgebildeten Elementen für das Verstärkungselement bietet den Vorteil, dass dadurch eine mechanische Belastbarkeit weiter erhöht werden kann. Einstückige Elemente können im Fall von Kunststoffelementen beispielsweise durch Spritzgussverfahren erhalten werden, und im Fall von Metallblechen können die einstückigen Elemente durch entsprechendes Biegen von Metallblechen erreicht werden.

In einer beispielhaften Ausführungsform hat der Träger Biegungen, welche entlang der Längsachse des Trägers verlaufen.

Das Vorsehen solcher längsverlaufender Biegungen hat den Vorteil, dass dadurch längliche Öffnungen gebildet werden können, welche das Einsatzelement auf ideale Art und Weise aufnehmen können.

Die Bezeichnung "Biegung" umfasst im Zusammenhang mit dieser Erfindung sowohl Richtungsänderungen, welche tatsächlich durch ein biegendes Verfahren entstanden sind, als auch Richtungsänderungen in Oberflächen, welche durch andere Herstellungsverfahren entstanden sind.

In einer beispielhaften Ausführungsform hat das Einsatzelement Biegungen, welche quer zur Längsachse des Einsatzelementes verlaufen.

Das Ausbilden solcher quer verlaufender Biegungen hat den Vorteil, dass dadurch das Einsatzelement Abschnitte aufweist, welche quer zu Abschnitten des Trägers verlaufen, so dass eine mechanische Stabilität des Gesamtsystems optimiert werden kann. Insbesondere werden durch solche Biegungen Abschnitte des Einsatzelementes erzeugt, welche sich ideal eignen, um das Einsatzelement am Träger und am Strukturelement zu verkleben.

In einer beispielhaften Ausführungsform hat der Träger einen mäanderförmigen Querschnitt in Bezug zu seiner Längsachse. Dabei kann eine Anzahl von Biegungen, welche zu einem solchen mäanderförmigen Querschnitt führen, unterschiedlich ausgestaltet sein.

In einer vorteilhaften Weiterbildung hat der Träger einen M-förmigen Querschnitt in Bezug zu seiner Längsachse. In diesem Ausführungsbeispiel hat der Träger sechs Biegungen, so dass drei längliche Öffnungen resultieren.

In alternativen Ausführungsbeispielen hat der Träger weniger oder aber auch mehr als sechs Biegungen, so dass auch eine andere Anzahl an länglichen Öffnungen vorhanden sein kann.

Besonders bevorzugt sind jedoch Ausführungsformen, bei welchen der Träger eine ungerade Anzahl an länglichen Öffnungen hat.

In einer beispielhaften Ausführungsform hat das Einsatzelement einen mäanderförmigen Längsschnitt in Bezug zu seiner Längsachse.

Das Vorsehen eines solchen mäanderförmigen Längsschnittes des Einsatzelementes hat den Vorteil, dass dadurch Abschnitte des Einsatzelementes gebildet werden, welche quer zu Abschnitten des Trägers verlaufen. Dies bietet eine besonders hohe mechanische Stabilität des Gesamtsystems bestehend aus Träger und Einsatzelement.

In einer beispielhaften Ausführungsform haben der Träger und/oder das Einsatzelement zumindest ein Loch.

Das Vorsehen solcher Löcher im Träger und/oder im Einsatzelement bietet den Vorteil, dass dadurch ein Gesamtgewicht des Verstärkungselements reduziert werden kann, dass ein Fluss von Beschichtungsflüssigkeit durch das Strukturelement mit eingesetztem Verstärkungselement verbessert werden kann, und dass andere spezifische Ansprüche in der Herstellung des Verstärkungselementes berücksichtigt werden können.

In einer beispielhaften Ausführungsform weist der Träger mehrere längliche Öffnungen auf, welche jeweils in Richtung der Längsachse verlaufen, und das Verstärkungselement umfasst mehrere Einsatzelemente, welche jeweils dazu ausgebildet sind, in den länglichen Öffnungen des Träges angeordnet zu werden.

Das Vorsehen von mehreren länglichen Öffnungen und mehreren darin anordenbaren Einsatzelementen bietet den Vorteil, dass dadurch eine weitere Verbesserung der mechanischen Stabilität des Verstärkungselementes erreicht werden kann. Durch das Vorsehen von mehreren länglichen Öffnungen kann insbesondere der Träger so ausgestaltet werden, dass er in eine Belastungsrichtung in sich bereits eine erhöhte Stabilität aufweist, beispielsweise durch das Vorsehen eines mäanderförmigen Querschnittes.

In einer beispielhaften Ausführungsform sind der erste Klebstoff und der zweite Klebstoff verschiedene Klebstoffe. In einer alternativen ausführungsforme sind der erste Klebstoff und der zweite Klebstoff gleiche Klebstoffe.

Je nach Anwendungszweck kann für den ersten bzw. den zweiten Klebstoff eine geeignete Klebstoffzusammensetzung gewählt werden. Wenn in erster Linie eine Strukturverstärkung im Vordergrund steht, ist es von Vorteil, die Klebstoffe nicht oder nur eingeschränkt zu expandieren. Dadurch wird eine erhöhte mechanische Stabilität erzielt. Beispielsweise kann für solche Anwendungszwecke ein Klebstoff, welcher unter dem Handelsnamen SikaPower 960 erhältlich ist, verwenden werden. Dieser Klebstoff hat keine oder im Wesentlichen keine schäumbaren Eigenschaften, sodass eine mechanisch sehr stabile Verbindung zwischen Trägerelement und Strukturelement hergestellt werden kann.

In einem weiteren Ausführungsbeispiel kann für solche Anwendungszwecke ein expandierbares Material, welches unter dem Handelsnamen SikaReinforcer 911-PB erhältlich ist, verwendet werden. Dieses expandierbare Material weist trotz dessen schäumbaren Eigenschaften eine sehr hohe mechanische Stabilität auf, und bietet zudem den Vorteil, dass durch das Schäumen Lücken überwunden bzw. Hohlräume geschlossen werden können.

Ein weiteres Beispiel eines solchen expandierbaren Materials mit Verstärkungseigenschaften ist SikaReinforcer^{®} 941, welches von der Sika Corp., USA, vertrieben wird. Dieser Klebstoff ist beschrieben in US 6,387,470.

Falls hingegen in erster Linie das Abschotten bzw. Abdichten von Hohlräumen im Vordergrund steht, kann ein Klebstoff gewählt werden, welcher eine deutlich höhere Expansionsrate aufweist. Für solche Anwendungen ist es in erster Linie wichtig, bestehende Hohlräume zuverlässig zu schliessen. Dies geschieht vorteilhafterweise durch stark expandierbare Klebstoffe. Beispielsweise kann für einen solchen Anwendungszweck ein stärker expandierbares Material eingesetzt werden, welches unter dem Handelsnamen SikaBaffle 450 erhältlich. Dieses stärker expandierbare Material bietet den Vorteil, dass dadurch beim Schäumen grössere Lücken überwunden bzw. grössere Hohlräume geschlossen werden können.

Ähnlich wie das Expansionsverhalten des Klebstoffes kann auch das Aushärteverhalten des Verbindungsmaterials gezielt dem jeweiligen Zweck angepasst werden.

In einer beispielhaften Ausführungsform ist der erste Klebstoff expandierbar ausgebildet. In einer bevorzugten Weiterbildung ist der erste Klebstoff durch eine Hitzeeinwirkung expandierbar ausgebildet. In einer bevorzugten Weiterbildung ist der erste Klebstoff weiterhin durch eine Hitzeeinwirkung aushärtbar ausgebildet.

Der erste Klebstoff kann dabei beispielsweise eine Expansionsrate zwischen 100% und 1000% aufweisen.

In einer alternativen Ausführungsform ist der erste Klebstoff nicht expandierbar ausgebildet. In einer solchen Ausführungsform wird der erste Klebstoff entweder in einen Zwischenraum zwischen Verstärkungselement und Strukturelement gepumpt, oder das Verstärkungselement wird im offenen Strukturelement verklebt, wobei das Strukturelement erst nach Einsetzen des Verstärkungselementes geschlossen wird. Nicht expandierbare Klebstoffe bieten den Vorteil, dass sie in der Regel eine höhere mechanische Stabilität aufweisen als expandierbare Klebstoffe.

Expandierbare Klebstoffe bieten hingegen den Vorteil, dass das Einbringen und Verkleben des Verstärkungselementes im Strukturelement einfacher und kostengünstiger ausgestaltet werden kann.

Erfindungsgemäss ist der zweite Klebstoff nicht expandierbar ausgebildet.

Ein nicht expandierbarer zweiter Klebstoff bietet den Vorteil, dass das Einsatzelement möglichst stabil mit dem Träger verklebt werden kann.

Die Bezeichnung "nicht expandierbar" umfasst im Zusammenhang mit dieser Erfindung Vorgänge, bei welchen sich ein Volumen entweder gar nicht verändert, oder aber um höchstens plus oder minus 10% des Ausgangsvolumens vergrößert bzw. verkleinert.

In einer beispielhaften Ausführungsform ragt das Einsatzelement nicht über Außenflächen des Trägers hinaus, wenn das Einsatzelement in der Öffnung des Trägers angeordnet ist.

Derart dimensionierte Einsatzelemente bzw. Träger bieten den Vorteil, dass das Verstärkungselement kompakt und dadurch mechanisch möglichst stabil ausgebildet werden kann.

In einer vorteilhaften Weiterbildung ist das im Träger angeordnete Einsatzelement bündig mit den Außenflächen des Trägers.

Dies hat den Vorteil, dass dadurch eine möglichst geschlossene äußere Oberfläche des Verstärkungselementes erreicht werden kann.

Zudem wird hier ein Fahrzeug mit einem Strukturelement, wobei das Strukturelement mit einem hier beschriebenen Verstärkungselement verstärkt ist, vorgeschlagen.

Einzelheiten und Vorteile der Erfindung werden im Folgenden anhand von Ausführungsbeispielen und mit Bezug auf schematische Zeichnungen beschrieben.

Es zeigen:
- Fig. 1: eine beispielhafte Darstellung einer Karosserie gemäß Stand der Technik;
- Fig. 2: eine schematische Darstellung zur Erläuterung eines beispielhaften Verstärkungselementes in einem Strukturelement gemäß Stand der Technik;
- Fig. 3a: schematische Darstellung eines beispielhaften Trägers;
- Fig. 3b: schematische Darstellung eines beispielhaften Einsatzelementes;
- Fig. 3c: schematische Darstellung von beispielhaften Einsatzelementen;
- Fig. 4: schematische Darstellung eines beispielhaften Verstärkungselementes; und
- Fig. 5: schematische Explosionsdarstellung eines beispielhaften Verstärkungselementes in einem beispielhaften Strukturelement.

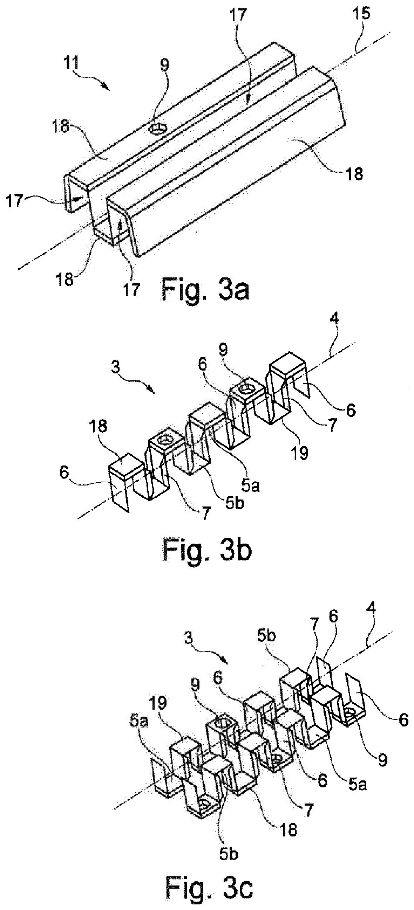

In Fig. 3a ist ein beispielhafter Träger 11 dargestellt. Der Träger 11 hat eine Längsachse 15. In diesem Ausführungsbeispiel hat der Träger 11 Biegungen, welche entlang der Längsachse 15 verlaufen, so dass der Träger 11 einen mäanderförmigen Querschnitt in Bezug auf seine Längsachse 15 aufweist. In diesem Ausführungsbeispiel hat der Träger 11 einen M-förmigen Querschnitt in Bezug auf seine Längsachse 15. Dies hat zur Folge, dass der Träger 11 drei längliche Öffnungen 17 hat.

In diesem Ausführungsbeispiel ist auf einer gesamten Außenfläche des Trägers 11 ein erster Klebstoff 18 angeordnet. In einem alternativen, nicht dargestellten Ausführungsbeispiel ist der erste Klebstoff 18 nur auf Teilbereichen der Außenfläche des Trägers 11 angeordnet.

Zudem hat der Träger 11 in einem Abschnitt ein Loch 9. Dieses Loch 9 macht einerseits den Träger leichter, und andererseits erlaubt das Loch 9 den Durchfluss von Flüssigkeiten, was insbesondere bei einer Tauchlackierung des Strukturelementes mit eingesetztem Verstärkungselement vorteilhaft ist.

In den Fig. 3b und 3c sind jeweils Einsatzelemente 3 dargestellt. Das in Fig. 3b dargestellte Einsatzelement 3 ist dabei vorgesehen zum Einbringen in die mittlere Öffnung 17 des Trägers 11 in Fig. 3a. Die beiden Einsatzelemente in Fig. 3c sind dabei vorgesehen zum Einbringen in die beiden äußeren Öffnungen 17 des Trägers 11 in Fig. 3a.

In diesem Ausführungsbeispiel sind die Einsatzelemente in den Fig. 3b und 3c baugleich ausgestaltet. In einem alternativen, nicht dargestellten Ausführungsbeispiel können Einsatzelemente 3 auch unterschiedlich ausgestaltet sein.

Die dargestellten Einsatzelemente 3 in den Fig. 3b und 3c haben jeweils Biegungen, welche quer zu einer Längsachse 4 der Einsatzelemente 3 verlaufen. Dies führt zu einem mäanderförmigen Längsschnitt der Einsatzelemente 3. Dabei werden die Einsatzelemente 3 durch die Biegungen in verschiedene Abschnitte unterteilt. Auf den ersten Abschnitten 5a, 5b ist dabei jeweils der erste Klebstoff 18 bzw. ein zweiter Klebstoff 19 angeordnet. Dabei ist der erste Klebstoff 18 auf einer ersten Gruppe 5a von ersten Abschnitten des Einsatzelementes 3 angeordnet, und der zweite Klebstoff 19 ist auf einer zweiten Gruppe 5b von ersten Abschnitten des Einsatzelementes 3 angeordnet. Einsatzelemente 3 werden nun so im Träger 11 gemäß Fig. 3a angeordnet, dass der erste Klebstoff 18 nach außen zu liegen kommt zur Verklebung der Einsatzelemente mit dem Strukturelement 12, 14, und dass der zweite Klebstoff 19 nach innen zu liegen kommt zur Verklebung der Einsatzelemente 3 mit dem Träger 11.

Die Einsatzelemente 3 haben auf verschiedenen Abschnitten Löcher 9. Diese Löcher 9 verringern einerseits ein Gewicht der Einsatzelemente 3 und verbessern andererseits einen Flüssigkeitsdurchfluss bei einer Tauchlackierung des Strukturelementes mit eingesetztem Verstärkungselement.

Die Einsatzelemente 3 im Beispiel gemäß den Fig. 3b und 3c weisen abwechslungsweise erste Abschnitte 5a, 5b und zweite Abschnitte 6 auf. Dabei liegen die ersten Abschnitte 5a, 5b jeweils parallel zu einer ersten Ebene, wobei die Längsachse 4 des Einsatzelementes 3 in dieser ersten Ebene liegt. Die zweiten Abschnitte 6 liegen dabei parallel zu einer zweiten Ebene, wobei die Längsachse 4 des Einsatzelementes 3 orthogonal zu dieser zweiten Ebene liegt. Diese Anordnung von ersten Abschnitten 5a, 5b und zweiten Abschnitten 6 möglichst einerseits eine ideale Verklebung des Einsatzelementes 3 am Träger 11 und am Strukturelement, und andererseits eine starke Verbesserung der mechanischen Stabilität des Verstärkungselementes durch die quer zu den Wänden des Trägers 11 liegenden zweiten Abschnitte 6.

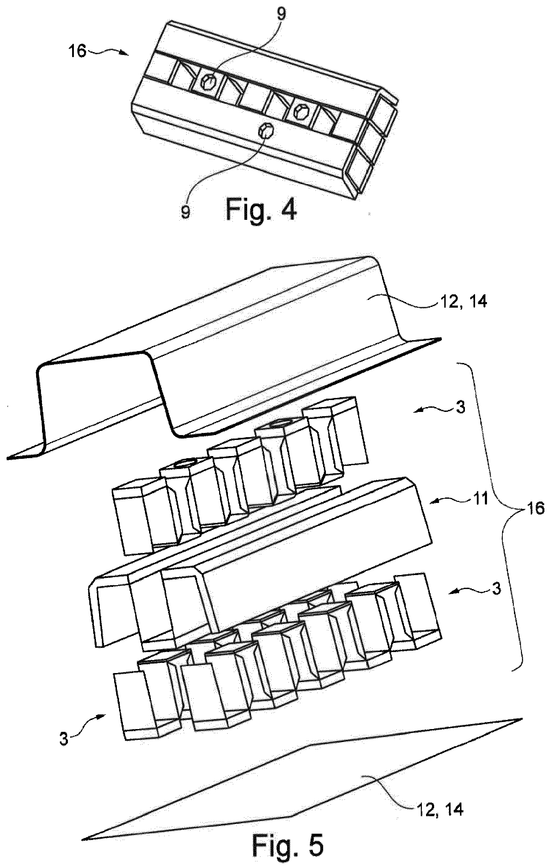

In Fig. 4 ist ein Verstärkungselement 16 gezeigt, welches in diesem Ausführungsbeispiel einen Träger 11 gemäß Fig. 3a mit drei Öffnungen 17 umfasst und drei Einsatzelemente 3 gemäß den Fig. 3b und 3c umfasst, welche jeweils in den Öffnungen 17 des Trägers 11 angeordnet sind. In dieser Darstellung des Verstärkungselementes 16 wird ersichtlich, dass durch das Vorsehen von Einsatzelementen 3 mit ersten Abschnitten 5a, 5b und zweiten Abschnitten 6 in Öffnungen des Trägerelementes 11 ein sehr kompaktes Verstärkungselement 16 entsteht, welches zudem eine vergrößerte Außenoberfläche zur Verklebung mit dem Strukturelement hat.

In Fig. 5 ist das Verstärkungselement 16 in einem Strukturelement 12, 14 in einer Explosionsdarstellung gezeigt. Dabei sind auch die Einsatzelemente 3 und der Träger 11 des Verstärkungselementes 16 dargestellt.

### Bezugszeichenliste

- 3: Einsatzelement
- 4: Längsachse des Einsatzelementes
- 5a: erste Gruppe der ersten Abschnitte des Einsatzelementes
- 5b: zweite Gruppe der ersten Abschnitte des Einsatzelementes
- 6: zweite Abschnitte des Einsatzelementes
- 7: Flansch
- 9: Loch
- 10: Karosserie
- 11: Träger
- 12: Verstrebungen (Strukturelement)
- 13: Klebstoff
- 14: Säule (Strukturelement)
- 15: Längsachse des Trägers
- 16: Verstärkungselement
- 17: Öffnung des Trägers
- 18: erster Klebstoff
- 19: zweiter Klebstoff

## Patentansprüche

1. Verstärkungselement (16) zur Verstärkung von Strukturelementen (12, 14) in Fahrzeugen, das Verstärkungselement (16) umfassend:
ein Träger (11) mit einer Längsachse (15), wobei der Träger (11) zumindest eine längliche Öffnung (17) aufweist, welche in Richtung der Längsachse (15) verläuft;
mindestens ein Einsatzelement (3) mit einer Längsachse (4), welches dazu ausgebildet ist, in der länglichen Öffnung (17) des Trägers (11) angeordnet zu werden, und welches mehrere erste Abschnitte (5a, 5b) und mehrere zweite Abschnitte (6) umfasst, wobei die ersten Abschnitte parallel zu einer ersten Ebene angeordnet sind, wobei die Längsachse (4) in dieser ersten Ebene liegt, und wobei die zweiten Abschnitte (6) parallel zu einer zweiten Ebene angeordnet sind, wobei die Längsachse (4) orthogonal zu dieser zweiten Ebene liegt;
ein erster Klebstoff (18), welcher auf einer Außenseite des Trägers (11) und auf einer ersten Gruppe (5a) von ersten Abschnitten des Einsatzelementes (3) anordenbar ist und welcher dazu ausgebildet ist, den Träger (11) und das Einsatzelement (3) im Strukturelement (12, 14) zu verkleben; und
ein zweiter Klebstoff (19), welcher auf einer zweiten Gruppe (5b) von ersten Abschnitten des Einsatzelementes (3) anordenbar ist und welcher dazu ausgebildet ist, das Einsatzelement (3) im Träger (11) zu verkleben,
wobei der zweite Klebstoff (19) nicht expandierbar ausgebildet ist.

2. Verstärkungselement (16) nach Anspruch 1, wobei der Träger (11) und/oder das Einsatzelement (3) aus Metallblech gebildet sind.

3. Verstärkungselement nach Anspruch 1, wobei der Träger (11) und/oder das Einsatzelement (3) aus Kunststoff gebildet sind.

4. Verstärkungselement nach einem der vorhergehenden Ansprüche, wobei der Träger (11) und/oder das Einsatzelement (3) einstückig ausgebildet sind.

5. Verstärkungselement (16) nach einem der vorhergehenden Ansprüche, wobei der Träger (11) Biegungen hat, welche entlang der Längsachse (15) des Trägers (11) verlaufen.

6. Verstärkungselement (16) nach einem der vorhergehenden Ansprüche, wobei das Einsatzelement (3) Biegungen hat, welche quer zur Längsachse (4) des Einsatzelementes (3) verlaufen.

7. Verstärkungselement (16) nach einem der vorhergehenden Ansprüche, wobei der Träger (11) einen mäanderförmigen Querschnitt in Bezug zu seiner Längsachse (15) hat.

8. Verstärkungselement (16) nach Anspruch 7, wobei der Träger (11) einen M-förmigen Querschnitt in Bezug zu seiner Längsachse (15) hat.

9. Verstärkungselement (16) nach einem der vorhergehenden Ansprüche, wobei das Einsatzelement (3) einen mäanderförmigen Längsschnitt in Bezug zu seiner Längsachse (4) hat.

10. Verstärkungselement (16) nach einem der vorhergehenden Ansprüche, wobei der Träger (11) und/oder das Einsatzelement (3) ein Loch (9) haben.

11. Verstärkungselement (16) nach einem der vorhergehenden Ansprüche, wobei der Träger (11) mehrere längliche Öffnungen (17) aufweist, welche jeweils in Richtung der Längsachse (15) verlaufen, und wobei das Verstärkungselement (16) mehrere Einsatzelemente (3) umfasst, welche jeweils dazu ausgebildet sind, in den länglichen Öffnungen (17) des Trägers (11) angeordnet zu werden.

12. Verstärkungselement (16) nach einem der vorhergehenden Ansprüche, wobei der erste Klebstoff (18) expandierbar ausgebildet ist.

13. Verstärkungselement (16) nach einem der vorhergehenden Ansprüche, wobei das Einsatzelement (3) nicht über den Träger (11) hinausragt, wenn das Einsatzelement (3) in der Öffnung (17) des Trägers (11) angeordnet ist.

14. Fahrzeug mit einem Strukturelement (12, 14), wobei das Strukturelement (12, 14) mit einem Verstärkungselement (16) nach einem der vorhergehenden Ansprüchen verstärkt ist.

## Claims

1. Reinforcement element (16) for reinforcing structural elements (12, 14) in vehicles, the reinforcement element (16) comprising:
a carrier (11) having a longitudinal axis (15), wherein the carrier (11) has at least one elongate opening (17) which extends in the direction of the longitudinal axis (15);
at least one insert element (3) which has a longitudinal axis (4) and which is constructed to be arranged in the elongate opening (17) of the carrier (11) and which comprises a plurality of first portions (5a, 5b) and a plurality of second portions (6), wherein the first portions are arranged parallel with a first plane, wherein the longitudinal axis (4) is located in this first plane, and wherein the second portions (6) are arranged parallel with a second plane, wherein the longitudinal axis (4) is located orthogonally to this second plane;
a first adhesive (18) which can be arranged on an outer side of the carrier (11) and on a first group (5a) of first portions of the insert element (3) and which is constructed to adhesively bond the carrier (11) and the insert element (3) in the structural element (12, 14); and
a second adhesive (19) which can be arranged on a second group (5b) of first portions of the insert element (3) and which is constructed to adhesively bond the insert element (3) in the carrier (11),
wherein the second adhesive (19) is constructed to be non-expandable.

2. Reinforcement element (16) according to Claim 1, wherein the carrier (11) and/or the insert element (3) is/are formed from sheet metal.

3. Reinforcement element according to Claim 1, wherein the carrier (11) and/or the insert element (3) is/are formed from plastics material.

4. Reinforcement element according to one of the preceding claims, wherein the carrier (11) and/or the insert element (3) is/are constructed integrally.

5. Reinforcement element (16) according to one of the preceding claims, wherein the carrier (11) has bends which extend along the longitudinal axis (15) of the carrier (11).

6. Reinforcement element (16) according to one of the preceding claims, wherein the insert element (3) has bends which extend transversely relative to the longitudinal axis (4) of the insert element (3).

7. Reinforcement element (16) according to one of the preceding claims, wherein the carrier (11) has a meandering cross-section relative to the longitudinal axis (15) thereof.

8. Reinforcement element (16) according to Claim 7, wherein the carrier (11) has an M-shaped cross-section with respect to the longitudinal axis (15) thereof.

9. Reinforcement element (16) according to one of the preceding claims, wherein the insert element (3) has a meandering longitudinal section with respect to the longitudinal axis (4) thereof.

10. Reinforcement element (16) according to one of the preceding claims, wherein the carrier (11) and/or the insert element (3) has/have a hole (9).

11. Reinforcement element (16) according to one of the preceding claims, wherein the carrier (11) has a plurality of elongate openings (17) which each extend in the direction of the longitudinal axis (15), and wherein the reinforcement element (16) comprises a plurality of insert elements (3) which are each constructed to be arranged in the elongate openings (17) of the carrier (11).

12. Reinforcement element (16) according to one of the preceding claims, wherein the first adhesive (18) is constructed to be expandable.

13. Reinforcement element (16) according to one of the preceding claims, wherein the insert element (3) does not protrude over the carrier (11) when the insert element (3) is arranged in the opening (17) of the carrier (11).

14. Vehicle having a structural element (12, 14), wherein the structural element (12, 14) is reinforced with a reinforcement element (16) according to one of the preceding claims.

## Revendications

1. Élément de renforcement (16) pour le renforcement d'éléments structuraux (12, 14) dans des véhicules, l'élément de renforcement (16) comportant :
un support (11) ayant un axe longitudinal (15), le support (11) comprenant au moins une ouverture allongée (17), qui s'étend dans la direction de l'axe longitudinal (15) ;
au moins un élément d'insertion (3) ayant un axe longitudinal (4), qui est conçu pour être agencé dans l'ouverture allongée (17) du support (11) et qui comporte plusieurs premières sections (5a, 5b) et plusieurs deuxièmes sections (6), les premières sections étant agencées parallèlement à un premier plan, l'axe longitudinal (4) étant situé dans ce premier plan, et les deuxièmes sections (6) étant agencées parallèlement à un deuxième plan, l'axe longitudinal (4) étant situé orthogonalement à ce deuxième plan ;
un premier adhésif (18), qui peut être agencé sur un côté extérieur du support (11) et sur un premier groupe (5a) de premières sections de l'élément d'insertion (3) et qui est conçu pour coller le support (11) et l'élément d'insertion (3) dans l'élément structural (12, 14) ; et
un deuxième adhésif (19), qui peut être agencé sur un deuxième groupe (5b) de premières sections de l'élément d'insertion (3) et qui est conçu pour coller l'élément d'insertion (3) dans le support (11),
dans lequel le deuxième adhésif (19) est conçu sous forme non expansible.

2. Élément de renforcement (16) selon la revendication 1, dans lequel le support (11) et/ou l'élément d'insertion (3) sont formés en tôle métallique.

3. Élément de renforcement selon la revendication 1, dans lequel le support (11) et/ou l'élément d'insertion (3) sont formés en matière plastique.

4. Élément de renforcement selon l'une quelconque des revendications précédentes, dans lequel le support (11) et/ou l'élément d'insertion (3) sont conçus d'un seul tenant.

5. Élément de renforcement (16) selon l'une quelconque des revendications précédentes, dans lequel le support (11) a des courbures, qui s'étendent le long de l'axe longitudinal (15) du support (11).

6. Élément de renforcement (16) selon l'une quelconque des revendications précédentes, dans lequel l'élément d'insertion (3) a des courbures, qui s'étendent perpendiculairement à l'axe longitudinal (4) de l'élément d'insertion (3).

7. Élément de renforcement (16) selon l'une quelconque des revendications précédentes, dans lequel le support (11) a une section transversale en forme de méandres par rapport à son axe longitudinal (15).

8. Élément de renforcement (16) selon la revendication 7, dans lequel le support (11) a une section transversale en forme de M par rapport à son axe longitudinal (15).

9. Élément de renforcement (16) selon l'une quelconque des revendications précédentes, dans lequel l'élément d'insertion (3) a une section longitudinale en forme de méandres par rapport à son axe longitudinal (4) .

10. Élément de renforcement (16) selon l'une quelconque des revendications précédentes, dans lequel le support (11) et/ou l'élément d'insertion (3) ont un trou (9).

11. Élément de renforcement (16) selon l'une quelconque des revendications précédentes, dans lequel le support (11) comprend plusieurs ouvertures allongées (17), qui s'étendent respectivement dans la direction de l'axe longitudinal (15), et dans lequel l'élément de renforcement (16) comporte plusieurs éléments d'insertion (3), qui sont respectivement conçus pour être agencés dans les ouvertures allongées (17) du support (11).

12. Élément de renforcement (16) selon l'une quelconque des revendications précédentes, dans lequel le premier adhésif (18) est conçu sous forme expansible.

13. Élément de renforcement (16) selon l'une quelconque des revendications précédentes, dans lequel l'élément d'insertion (3) ne dépasse pas du support (11) lorsque l'élément d'insertion (3) est agencé dans l'ouverture (17) du support (11).

14. Véhicule muni d'un élément structural (12, 14), dans lequel l'élément structural (12, 14) est renforcé avec un élément de renforcement (16) selon l'une quelconque des revendications précédentes.
